# EUROPEAN PATENT SPECIFICATION

(11) **EP 4 732 254 B1**
(45) Date of publication and mention of the grant of the patent: **14.10.2026**
(21) Application number: 24733000.4
(22) Date of filing: 19.06.2024
(51) Int. Cl.: G06V 10/60, G06V 10/82

(54) **OBJECT DETECTION IN IMAGES**
OBJEKTDETEKTION IN BILDERN
DÉTECTION D'OBJET DANS DES IMAGES

(30) Priority: 23.06.2023 EP 23181127
(43) Date of publication of application: 29.04.2026
(73) Proprietor: Koninklijke Philips N.V., 5656 AE Eindhoven (NL)
(72) Inventor: SOMMER, Karsten, 5656 AG Eindhoven (NL); KRUEGER, Sascha, 5656 AG Eindhoven (NL)
(74) Representative: Philips Intellectual Property & Standards
(86) International application number: PCT/EP2024/067005
(87) International publication number: WO 2024/261010

(56) References cited:
- SCHUTERA MARK ET AL: "Night-to-Day: Online Image-to-Image Translation for Object Detection Within Autonomous Driving by Night", IEEE TRANSACTIONS ON INTELLIGENT VEHICLES, IEEE, vol. 6, no. 3, 19 November 2020 (2020-11-19), pages 480 - 489, XP011874790, ISSN: 2379-8858, [retrieved on 20210826], DOI: 10.1109/TIV.2020.3039456
- LIANG SHEN ET AL: "MSR-net:Low-light Image Enhancement Using Deep Convolutional Network", ARXIV.ORG, CORNELL UNIVERSITY LIBRARY, 201 OLIN LIBRARY CORNELL UNIVERSITY ITHACA, NY 14853, 7 November 2017 (2017-11-07), XP080835134
- GUO DEQUAN ET AL: "Face illumination normalization based on generative adversarial network", NATURAL COMPUTING, vol. 22, no. 1, 20 July 2022 (2022-07-20), NL, pages 105 - 117, XP093198119, ISSN: 1567-7818, Retrieved from the Internet <URL:https://link.springer.com/article/10.1007/s11047-022-09892-4/fulltext.html> [retrieved on 20240823], DOI: 10.1007/s11047-022-09892-4
- SINGH ANUBHAV ET AL: "Human Pose Estimation Using Convolutional Neural Networks", 2019 AMITY INTERNATIONAL CONFERENCE ON ARTIFICIAL INTELLIGENCE (AICAI), IEEE, 4 February 2019 (2019-02-04), pages 946 - 952, XP033543007, DOI: 10.1109/AICAI.2019.8701267

## Description

### FIELD OF THE INVENTION

The invention relates to the field of object detection in images. In particular, the invention relates to body keypoint detection in images.

### BACKGROUND OF THE INVENTION

Object detection algorithms are used to identify and locate objects within images or videos. These algorithms aim to automate the process of object recognition, enabling computers to interpret visual information. Object detection algorithms can be used in a variety of applications.

For example, improvement of the clinical workflow using automated exam preparation and object detections has shown promise in boosting efficiency in medical imaging departments. External camera devices have been shown to be a suitable tool for this purpose, allowing for the accurate localization of anatomical keypoints via object detections algorithms to automatically define the scan position. In most current implementations, dedicated keypoint detection neural networks are used to analyze the camera images.

However, keypoint detection and, more generally, object detection, used for determining the scan position has been found to not always provide the performance expected from the object detection algorithms used. Thus, there is a need to improve object detection. The relevant prior art disclosing the use of neural networks to normalize the lighting conditins is found the following articles: SCHUTERA MARK ET AL: "Night-to-Day: Online Image-to-Image Translation for Object Detection Within Autonomous Driving by Night", IEEE TRANSACTIONS ON INTELLIGENT VEHICLES, IEEE, vol. 6, no. 3, 19 November 2020 (2020-11-19), pages 480-489, LIANG SHEN ET AL: "MSR-net:Low-light Image Enhancement Using Deep Convolutional Network",ARXIV.ORG, CORNELL UNIVERSITY LIBRARY, 201 OLIN LIBRARY CORNELL UNIVERSITY ITHACA, NY 14853, 7 November 2017, and GUO DEQUAN ET AL: "Face illumination normalization based on generative adversarial network", NATURAL COMPUTING, vol. 22, no. 120 July 2022 (2022-07-20), pages 105-117, XP093198119,NL, ISSN: 1567-7818, DOI: 10.1007/s11047-022-09892-4.

### SUMMARY OF THE INVENTION

The invention is defined by the claims.

According to examples in accordance with an aspect of the invention, there is provided a computer-implemented method of object detection in a first image taken at sub-optimal lighting conditions, the method comprising:
inputting the first image into a pre-processing neural network trained with training images taken at normalized lighting conditions, wherein the pre-processing neural network is configured to output a prediction used to generate a second image containing the contents of the first image at normalized lighting conditions; and
performing object detection on the second image,
wherein:
   when object detection is performed on images taken at sub-optimal lighting conditions, a resulting object detection confidence score does not meet a confidence threshold, and
   when object detection is performed on images taken at normalized lighting conditions, the resulting object detection confidence score meets the confidence threshold.

Object detection comprises determining one or more points and/or regions indicative of the position of an object in the first image. For example, object detection may comprise determining keypoints, bounding boxes, heatmaps, segmentation masks etc.

Generally, neural networks have been used for object detection. However, it has been realized that said networks are usually only trained with images at optimal light conditions. As such, when inputting images taken with sub-optimal light conditions, the object detection output may not be as good as expected from the network.

Thus, it is proposed to normalize the light conditions of the first images prior to performing object detection. This means that the second images (light normalized) will have improved lighting conditions, compared to the original first image, before object detection is performed.

The neural network is trained to improve the lighting conditions of the first image.

Object detection typically outputs a confidence score for each object detected. The confidence score indicates how likely the detected object is to be correct. Improved lighting conditions at which the images are taken improve the confidence scores.

Performing object detection means applying an object detection algorithm to the second image.

The pre-processing neural network may be a light normalization network trained to output the second image.

The light normalization network may be further trained to output a performance score for the second image.

The light normalization network can be trained with performance scores for the training images (at sub-optimal lighting conditions) and the reference images (at optimal lighting conditions). Thus, the light normalization network can predict a performance score for the second image.

User-feedback may be generated if the performance score is below a performance threshold.

The pre-processing neural network may be a parameter normalization network trained to output one or more normalizing lighting parameters which, when applied to the first image, normalize the lighting conditions of the first image.

The method may further comprises applying the normalizing lighting parameters to the first image to generate the second image.

The parameter normalization network may be trained to output one or more of normalized image brightness, normalized image contrast and normalized gamma correction.

The method may further comprise generating user-feedback in response to one or more of the normalizing lighting parameters exceeding a first pre-determined threshold.

Having to apply normalizing lighting parameters which would cause a large difference in the perceived lighting conditions between the first and second image may indicate that the first image had particularly bad lighting conditions. The user-feedback can provide an indication of the lighting conditions of the first image. The user could then decide to adjust the lighting of, for example, the room prior to obtaining a new first image.

The method may further comprise determining a difference between the first image and the second image and generating user-feedback in response to the difference exceeding a second pre-determined threshold.

Large differences between the first and second images may indicate that the first image had particularly bad lighting conditions. The user-feedback can provide an indication of the lighting conditions of the first image. The user could then decide to adjust the lighting of, for example, the room prior to obtaining a new first image.

Performing object detection may comprise applying a body keypoint algorithm configured to output keypoints of a person's body in the second image.

The invention also provides a computer program carrier comprising computer program code which, when executed on a computer, causes the computer to perform all of the steps according to the afore-mentioned method.

The invention also provides a system for object detection in a first image taken at sub-optimal lighting conditions, the system comprising a processor configured to:
input the first image into a pre-processing neural network trained with training images taken at normalized lighting conditions, wherein the pre-processing neural network is configured to output a prediction used to generate a second image containing the contents of the first image at normalized lighting conditions; and
perform object detection on the second image,
wherein:
   when object detection is performed on images taken at sub-optimal lighting conditions, a resulting object detection confidence score does not meet a confidence threshold, and
   when object detection is performed on images taken at normalized lighting conditions, the resulting object detection confidence score meets the confidence threshold.

The pre-processing neural network may be a light normalization network trained to output the second image.

The light normalization network may be further trained to output a performance score for the second image.

The pre-processing neural network may be a parameter normalization network trained to output one or more normalizing lighting parameters which, when applied to the first image, normalize the lighting conditions of the first image.

The processor may be further configured to apply the normalizing lighting parameters to the first image to generate the second image.

The parameters normalization network may be trained to output one or more of a normalized image brightness, a normalized image contrast and a normalized gamma correction.

The processor may be further configured to generate user-feedback in response to one or more of the normalizing lighting parameters exceeding a first pre-determined threshold.

The processor may be further configured to determine a difference between the first image and the second image and generate user-feedback in response to the difference exceeding a second pre-determined threshold.

The processor may be configured to perform object detection by applying a body keypoint algorithm configured to output keypoints of a person's body in the second image.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a method of object detection using a light normalization neural network;
Fig. 2 shows a method of object detection using a parameter normalization neural network;
Fig. 3 shows the results of using the pre-processing network for object detection; and
Fig. 4 shows a method of object detection in a first image taken at sub-optimal lighting conditions.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method of object detection in a first image taken at sub-optimal lighting conditions. The first image is input into a pre-processing neural network trained with training images taken at normalized lighting conditions, wherein the pre-processing neural network is configured to output a prediction used to generate a second image containing the contents of the first image at normalized lighting conditions. Object detection is then performed on the second image.

Neural networks for body keypoint detection are typically trained on a large, annotated dataset. It has been realized that most available datasets feature images of various humans under generally favorable lighting conditions. Consequently, the resulting keypoint detection neural networks show optimal performance for such lighting conditions. When applied to other circumstances (e.g., low lighting - dark images, high noise conditions, rolling shutter stripe artifacts from flickering light sources, strong local shadowing, etc.) the performance of keypoint detection drops substantially.

Without additional measures to prevent this, the user of the camera-based workflow support system would not receive any feedback about this performance drop, potentially leading to frustration about the system's incorrect predictions. Classical methods (e.g., measurement of noise/signal-to-noise ratio, camera exposure, gain, etc.) could be used to detect unfavorable image characteristics but may be difficult to analyze in case of multiple simultaneous corruptions and/or complex effects such as spatially varying lighting (e.g., spotlights).

To avoid such complications, an additional image pre-processing step is proposed to ensure optimal image characteristics for the object detection. The extent of the image modifications performed in this pre-processing step can be used to provide feedback to the user. In the case where severe modifications are performed, the user can be informed and asked to improve the lighting conditions of the scene.

The pre-processing step can be used by a camera-based workflow support system to improve object detection. For example, the system may comprise a ceiling-mounted optical camera that provides a continuous data stream of a table for a subject. Alternatively, gantry or bore mounted cameras with sufficient view of the subject could be used. The system may also comprise a dedicated image pre-processing module to optimize image characteristics and a processor configured to input images from the camera(s) to a body keypoint detection neural network.

After installation of the camera-based workflow support system at a clinical site, a pre-processing module is applied to all incoming images from the camera's data stream.

In a first implementation, the pre-processing step can be implemented as a dedicated light normalization neural network used to directly correct the lighting conditions in the incoming raw camera image.

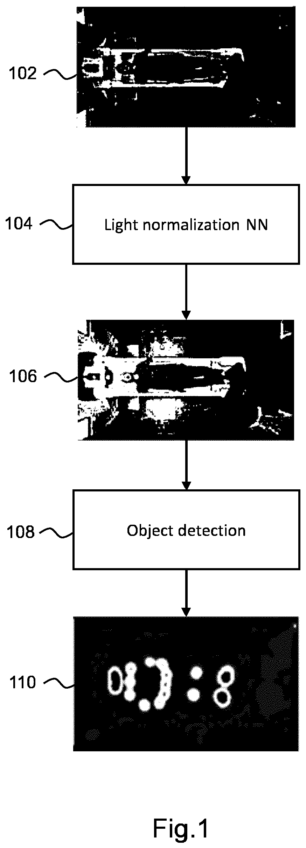

Fig. 1 shows a method of object detection 108 using a light normalization neural network 104. Raw camera images 102 are input into the light normalization neural network 104. The output of the neural network 104 consists of a corrected image 106 with the same image content as the raw camera image 102 but improved lighting conditions.

The light normalization neural network 104 is trained to provide normalized lighting conditions for the raw camera images 102. The corrected image 106 is further processed by an object detection network 108 to locate, for example, body keypoints 110 to be used for various workflow support applications.

For the lighting normalization network 104, any architecture for image-to-image translation described in the literature can be used (e.g., U-Net, HRNet, etc.). A simple method to create a suitable training dataset is to acquire a range of camera images with good lighting conditions (i.e., suitable for the body keypoint detection neural network) and retrospectively simulate a variety of bad lighting conditions. Examples of such image modifications include variation of image brightness and/or image contrast, injection of artificial noise, as well as simulation of additional diffuse or directed light sources. The network is then trained to produce the original image with good lighting conditions, given the modified image as input.

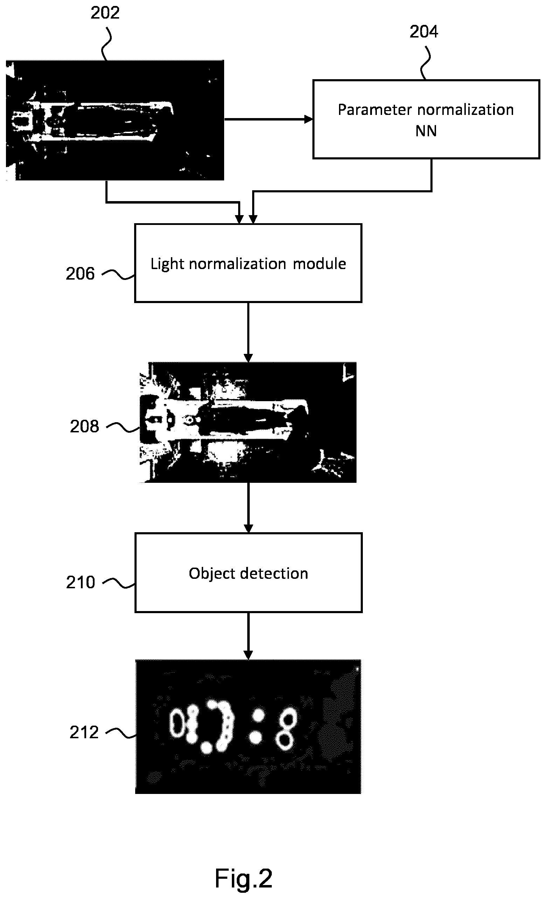

Fig. 2 shows a method of object detection 210 using a parameter normalization neural network 204. In this second implementation, a lighting normalization module 206 and the parameter normalization neural network 204 are used to pre-process the original image 202. The light normalization module 202 consists of standard image transformations (e.g., image brightness, image contrast, gamma correction, etc.) which are applied to the original image 202 to generate a corrected image 208. The parameters for this module are estimated by the dedicated parameter normalization neural network 204. The resulting corrected image 208 can then be input into an object detection algorithm 210 to locate, for example, body keypoints 212.

For the parameter normalization neural network, any architecture for image classification/regression can be used (e.g., ResNet, EfficientNet etc.). Training of the network can be realized by using similar image modifications as described for the first implementation and using the modification parameters (e.g., brightness variation, contrast variation etc.) as ground truth.

In case of sub-optimal lighting conditions, it may be useful to provide feedback to the operator/user who can then decide to adjust the lighting. For the first implementation, the difference between the corrected image and the raw camera image could be analyzed (e.g., large uniform differences indicate may indicate that heavy brightness adjustments were performed because the raw camera image was too dark/bright). For the second implementation, user feedback could be based on the extent of the predicted parameters output by the parameter normalization network.

This network-based image correction pre-processing step can substantially boost the performance of the subsequent object detection network. Nevertheless, in case of very poor (i.e., sub-optimal) lighting conditions, a performance drop of the object detection is unavoidable. The lighting normalization network could be extended to quantify this performance drop. To realize this feature, the training can be performed by simulating a variety of deviating lighting conditions as described above for the first implementation. Since the reference images (with reference lighting) are also available in the training dataset (i.e., training images), the reference performance drop can be quantified by applying the object detection network to each image pair and calculating, for example, the mean-squared-error between both object detection outputs.

The architecture of the lighting normalization network can be modified, for example, by the insertion of an additional output heatmap and trained to predict the observed performance drop of the body keypoint detection network.

Visual and/or audio feedback can be provided to the user if the predicted performance score is outside of pre-defined performance specifications.

According to the invention, the pre-processing neural network(s) and the object detection neural network(s) are jointly trained using the same training images. To this end, the weights of the body keypoint detection network are kept fixed, and the resulting object localization error is used as a loss function for the pre-processing neural network.

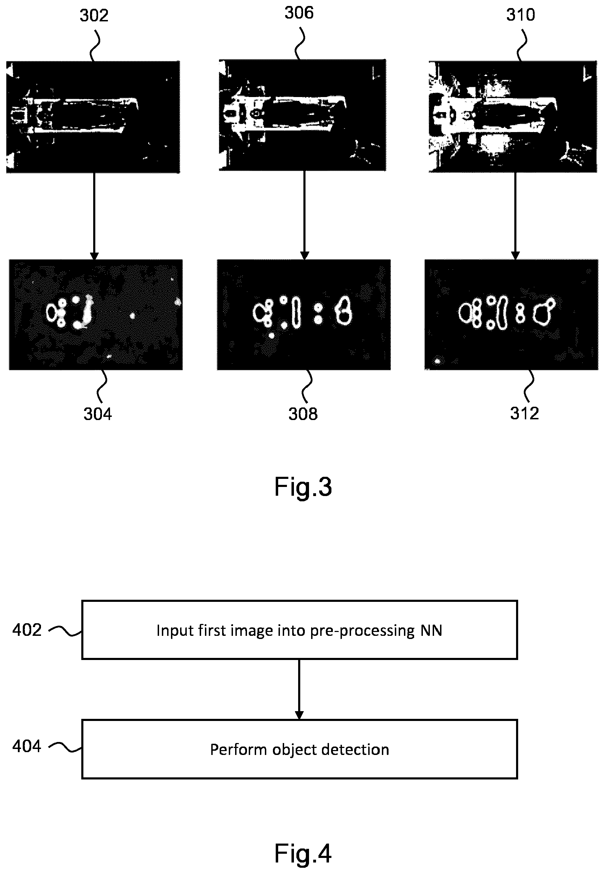

Fig. 3 shows the results of using the pre-processing network for object detection. In this case, a light normalization neural network was used to correct a first image 302. In this example, a reference image 310 is obtained from a magnetic resonance imaging (MRI) exam preparation with good lighting conditions. The reference heatmap 312 output by a body keypoint network for the reference image 310 shows good performance.

The reference image 310 was modified to simulate bad lighting conditions (e.g., very low brightness/contrast etc.). The heatmap 304 output by the body keypoint network for the modified image 310 shows poor performance due to the poor/sub-optimal (simulated) lighting conditions in the modified image.

The modified image 302 was then fed to the lighting normalization network which resulted in the corrected image 306. The heatmap 308 by the body keypoint detection network for the corrected image 306 shows an improvement in performance compared to the modified image 302. This shows that the correction of lighting conditions by the pre-processing network improves object detection considerably.

Fig. 4 shows a method of object detection in a first image taken at sub-optimal lighting conditions. The method comprises inputting 402 the first image into a pre-processing neural network trained with training images taken at normalized lighting conditions. The neural network is configured to output a prediction used to generate a second image containing the contents of the first image at normalized lighting conditions. Object detection is then performed 404 on the second image (i.e., the second image is input into an object detection neural network trained to locate objects (e.g., body keypoints etc.) in the second image.

When object detection is performed on images taken at sub-optimal (i.e., poor) lighting conditions, a resulting object detection confidence score does not meet a confidence threshold.

When object detection is performed on images taken at normalized lighting conditions, the resulting object detection confidence score meets the confidence threshold.

The methods and systems described herein are particularly advantageous when applied to any object detection method that is sensitive to lighting conditions (e.g., body keypoint detection, object segmentation etc.).

Any method described herein may be computer-implemented, where computer-implemented means that the steps of said methods are performed by one or more computers and where a computer is defined as a device suitable for processing data. A computer may be suitable for processing data according to prescribed instructions.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

The computer program carrier may comprise computer memory (e.g., random-access memory), computer storage (e.g., hard drives, solid-state drives etc.). The computer program carrier may be a bitstream carrying the computer program code.

A computer program code may be stored/distributed on a suitable medium, such as an optical storage medium or a solid-state medium supplied together with or as part of other hardware, but may also be distributed in other forms, such as via the Internet or other wired or wireless telecommunication systems.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

Any methods described herein exclude a method for performing mental acts as such.

## Claims

1. A computer-implemented method for a camera-based clinical workflow support system for object detection in a first image taken at sub-optimal lighting conditions, the method comprising:
inputting (402) the first image into a pre-processing neural network trained with training images taken at normalized lighting conditions,
wherein the pre-processing neural network is a parameter normalization network trained to output one or more normalizing lighting parameters which, when applied to the first image, normalize the lighting conditions of the first image, and
wherein the normalizing lighting parameters are applied to the first image, and wherein the pre-processing neural network is configured to output a prediction used to generate a second image containing the contents of the first image at normalized lighting conditions; and
performing (404) object detection on the second image,
wherein:
when object detection is performed on images taken at sub-optimal lighting conditions, a resulting object detection confidence score does not meet a confidence threshold,
when object detection is performed on images taken at normalized lighting conditions, the resulting object detection confidence score meets the confidence threshold; and
wherein the pre-processing neural network and the object detection neural network have been jointly trained using the same training images, wherein the weights of the body keypoint detection network have been kept fixed, and the resulting object localization error has been used as a loss function for the pre-processing neural network.

2. The method of claim 1, wherein the pre-processing neural network is a light normalization network trained to output the second image.

3. The method of claim 2, wherein the light normalization network is further trained to output a performance score for the second image.

4. The method of claims 1 to 3, wherein the parameters normalization network is trained to output one or more of:
normalized image brightness;
normalized image contrast; and
normalized gamma correction.

5. The method of claims 1 to 4, further comprising generating user-feedback in response to one or more of the normalizing lighting parameters exceeding a first pre-determined threshold.

6. The method of any of claims 1 to 5, further comprising:
determining a difference between the first image and the second image; and
generating user-feedback in response to the difference exceeding a second pre-determined threshold.

7. The method of any of claims 1 to 6, wherein performing object detection comprises applying a body keypoint algorithm configured to output keypoints of a person's body in the second image.

8. A computer program carrier comprising computer program code which, when executed on a computer, causes the computer to perform all of the steps according to any of claims 1 to 7.

9. A camera-based clinical workflow support system for object detection in a first image taken at sub-optimal lighting conditions, the system comprising a processor configured to:
input (402) the first image into a pre-processing neural network trained with training images taken at normalized lighting conditions,
wherein the pre-processing neural network is a parameter normalization network trained to output one or more normalizing lighting parameters which, when applied to the first image, normalize the lighting conditions of the first image, and
wherein the normalizing lighting parameters are applied to the first image, and
wherein the pre-processing neural network is configured to output a prediction used to generate a second image containing the contents of the first image at normalized lighting conditions; and
perform (404) object detection on the second image,
wherein:
when object detection is performed on images taken at sub-optimal lighting conditions, a resulting object detection confidence score does not meet a confidence threshold, and
when object detection is performed on images taken at normalized lighting conditions, the resulting object detection confidence score meets the confidence threshold; and
wherein the pre-processing neural network and the object detection neural network have been jointly trained using the same training images, wherein the weights of the body keypoint detection network have been kept fixed, and the resulting object localization error has been used as a loss function for the pre-processing neural network.

10. The system of claim 9, wherein the pre-processing neural network is a light normalization network trained to output the second image.

11. The system of claim 10, wherein the light normalization network is further trained to output a performance score for the second image.

12. The system of claim 9, wherein the pre-processing neural network is a parameter normalization network trained to output one or more normalizing lighting parameters which, when applied to the first image, normalize the lighting conditions of the first image and the processor is further configured to apply the normalizing lighting parameters to the first image to generate the second image.

13. The system of claim 12, wherein the parameters normalization network is trained to output one or more of:
normalized image brightness;
normalized image contrast; and
normalized gamma correction.

14. The system of claims 12 or 13, wherein the processor is further configured to generate user-feedback in response to one or more of the normalizing lighting parameters exceeding a first pre-determined threshold.

15. The system of claims 12 or 13, wherein the processor is further configured to determine a difference between the first image and the second image and generate user-feedback in response to the difference exceeding a second pre-determined threshold.

16. The system of claims 9 to 15, wherein the processor is configured to perform object detection by applying a body keypoint algorithm configured to output keypoints of a person's body in the second image.

## Patentansprüche

1. Computerimplementiertes Verfahren für ein kamerabasiertes klinisches Workflow-Unterstützungssystem zur Objekterkennung in einem ersten Bild, das unter suboptimalen Beleuchtungsbedingungen aufgenommen wurde, wobei das Verfahren umfasst:
Eingeben (402) des ersten Bildes in ein neuronales Netz zur Vorverarbeitung, das mit Trainingsbildern trainiert wurde, die unter normalisierten Beleuchtungsbedingungen aufgenommen wurden,
wobei das neuronale Netz zur Vorverarbeitung ein Netz zur Parameternormalisierung ist, das darauf trainiert ist, einen oder mehrere normalisierende Beleuchtungsparameter auszugeben, die die Beleuchtungsbedingungen des ersten Bildes normalisieren, wenn sie auf das erste Bild angewendet werden, und
wobei die normalisierenden Beleuchtungsparameter auf das erste Bild angewendet werden, und
wobei das neuronale Netz zur Vorverarbeitung zum Ausgeben einer Vorhersage ausgebildet ist, die zum Erzeugen eines zweiten Bildes verwendet wird, das den Inhalt des ersten Bildes unter normalisierten Beleuchtungsbedingungen enthält; und
Durchführen (404) der Objekterkennung an dem zweiten Bild,
wobei:
wenn die Objekterkennung an Bildern durchgeführt wird, die unter suboptimalen Beleuchtungsbedingungen aufgenommen wurden, ein resultierender Konfidenzwert der Objekterkennung einen Konfidenzschwellenwert nicht erreicht,
wenn die Objekterkennung an Bildern durchgeführt wird, die unter normalisierten Beleuchtungsbedingungen aufgenommen wurden, der resultierende Konfidenzwert der Objekterkennung den Konfidenzschwellenwert erreicht; und
wobei das neuronale Netz zur Vorverarbeitung und das neuronale Netz zur Objekterkennung gemeinsam mit denselben Trainingsbildern trainiert wurden, wobei die Gewichtungen des Netzes zur Körperschlüsselpunkterkennung fixiert gehalten wurden und der resultierende Objektlokalisierungsfehler als eine Verlustfunktion für das neuronale Netz zur Vorverarbeitung verwendet wurde.

2. Verfahren nach Anspruch 1, wobei es sich bei dem neuronalen Netz zur Vorverarbeitung um ein Netz zur Lichtnormalisierung handelt, das zum Ausgeben des zweiten Bildes trainiert ist.

3. Verfahren nach Anspruch 2, wobei das Netz zur Lichtnormalisierung weiter zum Ausgeben eines Leistungswerts für das zweite Bild trainiert ist.

4. Verfahren nach Anspruch 1 bis 3, wobei das Netz zur Parameternormalisierung zum Ausgeben von einem oder mehreren trainiert ist von:
normalisierter Bildhelligkeit;
normalisiertem Bildkontrast; und
normalisierter Gammakorrektur.

5. Verfahren nach Anspruch 1 bis 4, weiter umfassend Generieren von Benutzerfeedback als Reaktion darauf, dass einer oder mehrere der normalisierenden Beleuchtungsparameter einen ersten vorbestimmten Schwellenwert überschreiten.

6. Verfahren nach einem der Ansprüche 1 bis 5, weiter umfassend:
Bestimmen einer Differenz zwischen dem ersten Bild und dem zweiten Bild; und
Generieren von Benutzerfeedback als Reaktion darauf, dass die Differenz einen zweiten vorbestimmten Schwellenwert überschreitet.

7. Verfahren nach einem der Ansprüche 1 bis 6, wobei Durchführen der Objekterkennung ein Anwenden eines Körperschlüsselpunktalgorithmus umfasst, der zum Ausgeben von Schlüsselpunkten des Körpers einer Person in dem zweiten Bild ausgebildet ist.

8. Computerprogrammträger, umfassend Computerprogrammcode, der bewirkt, wenn er auf einem Computer ausgeführt wird, dass der Computer alle Schritte nach einem der Ansprüche 1- bis 7 durchführt.

9. Kamerabasiertes klinisches Workflow-Unterstützungssystem zur Objekterkennung in einem ersten Bild, das unter suboptimalen Beleuchtungsbedingungen aufgenommen wurde, wobei das System einen Prozessor umfasst, der ausgebildet ist zum:
Eingeben (402) des ersten Bildes in ein neuronales Netz zur Vorverarbeitung, das mit Trainingsbildern trainiert wurde, die unter normalisierten Beleuchtungsbedingungen aufgenommen wurden,
wobei das neuronale Netz zur Vorverarbeitung ein Netz zur Parameternormalisierung ist, das darauf trainiert ist, einen oder mehrere normalisierende Beleuchtungsparameter auszugeben, die die Beleuchtungsbedingungen des ersten Bildes normalisieren, wenn sie auf das erste Bild angewendet werden, und
wobei die normalisierenden Beleuchtungsparameter auf das erste Bild angewendet werden, und
wobei das neuronale Netz zur Vorverarbeitung zum Ausgeben einer Vorhersage ausgebildet ist, die zum Erzeugen eines zweiten Bildes verwendet wird, das den Inhalt des ersten Bildes unter normalisierten Beleuchtungsbedingungen enthält; und
Durchführen (404) der Objekterkennung an dem zweiten Bild,
wobei:
wenn die Objekterkennung an Bildern durchgeführt wird, die unter suboptimalen Beleuchtungsbedingungen aufgenommen wurden, ein resultierender Konfidenzwert der Objekterkennung einen Konfidenzschwellenwert nicht erreicht, und
wenn die Objekterkennung an Bildern durchgeführt wird, die unter normalisierten Beleuchtungsbedingungen aufgenommen wurden, der resultierende Konfidenzwert der Objekterkennung den Konfidenzschwellenwert erreicht; und
wobei das neuronale Netz zur Vorverarbeitung und das neuronale Netz zur Objekterkennung gemeinsam mit denselben Trainingsbildern trainiert wurden, wobei die Gewichtungen des Netzes zur Körperschlüsselpunkterkennung fixiert gehalten wurden und der resultierende Objektlokalisierungsfehler als eine Verlustfunktion für das neuronale Netz zur Vorverarbeitung verwendet wurde.

10. System nach Anspruch 9, wobei es sich bei dem neuronalen Netz zur Vorverarbeitung um ein Netz zur Lichtnormalisierung handelt, das zum Ausgeben des zweiten Bildes trainiert ist.

11. System nach Anspruch 10, wobei das Netz zur Lichtnormalisierung weiter zum Ausgeben eines Leistungswerts für das zweite Bild trainiert ist.

12. System nach Anspruch 9, wobei das neuronale Netz zur Vorverarbeitung ein Netz zur Parameternormalisierung ist, das darauf trainiert ist, einen oder mehrere normalisierende Beleuchtungsparameter auszugeben, die die Beleuchtungsbedingungen des ersten Bildes normalisieren, wenn sie auf das erste Bild angewendet werden, und der Prozessor weiter ausgebildet ist zum Anwenden der normalisierenden Beleuchtungsparameter auf das erste Bild, um das zweite Bild zu erzeugen.

13. System nach Anspruch 12, wobei das Netz zur Parameternormalisierung zum Ausgeben von einem oder mehreren trainiert ist von:
normalisierter Bildhelligkeit;
normalisiertem Bildkontrast; und
normalisierter Gammakorrektur.

14. System nach Anspruch 12 oder 13, wobei der Prozessor weiter ausgebildet ist zum Generieren von Benutzerfeedback als Reaktion darauf, dass einer oder mehrere der normalisierenden Beleuchtungsparameter einen ersten vorbestimmten Schwellenwert überschreiten.

15. System nach Anspruch 12 oder 13, wobei der Prozessor weiter ausgebildet ist zum Bestimmen einer Differenz zwischen dem ersten Bild und dem zweiten Bild und Generieren von Benutzerfeedback als Reaktion darauf, dass die Differenz einen zweiten vorbestimmten Schwellenwert überschreitet.

16. System nach Anspruch 9 bis 15, wobei der Prozessor ausgebildet ist zum Durchführen der Objekterkennung durch Anwenden eines Körperschlüsselpunktalgorithmus, der zum Ausgeben von Schlüsselpunkten des Körpers einer Person in dem zweiten Bild ausgebildet ist.

## Revendications

1. Procédé mis en œuvre par ordinateur pour un système de prise en charge de flux de travail clinique par caméra pour la détection d'objet dans une première image prise dans des conditions d'éclairage sous-optimales, le procédé comprenant :
l'entrée (402) de la première image dans un réseau neuronal de prétraitement entraîné avec des images d'entraînement prises dans des conditions d'éclairage normalisées,
dans lequel le réseau neuronal de prétraitement est un réseau de normalisation de paramètres entraîné à émettre un ou plusieurs paramètres d'éclairage normalisants qui, lorsqu'ils sont appliqués à la première image, normalisent les conditions d'éclairage de la première image, et
dans lequel les paramètres d'éclairage normalisants sont appliqués à la première image, et
dans lequel le réseau neuronal de prétraitement est configuré pour émettre une prédiction utilisée pour générer une seconde image contenant le contenu de la première image dans des conditions d'éclairage normalisées ; et
la réalisation (404) d'une détection d'objet sur la seconde image,
dans lequel :
lorsque la détection d'objet est réalisée sur des images prises dans des conditions d'éclairage sous-optimales, le score de confiance de détection d'objet résultant ne satisfait pas à un seuil de confiance,
lorsque la détection d'objet est réalisée sur des images prises dans des conditions d'éclairage normalisées, le score de confiance de détection d'objet résultant satisfait au seuil de confiance ; et
dans lequel le réseau neuronal de prétraitement et le réseau neuronal de détection d'objet ont été entraînés conjointement en utilisant les mêmes images d'entraînement, dans lequel les pondérations du réseau de détection de point clé de corps ont été maintenus fixes, et l'erreur de localisation d'objet résultante a été utilisée en tant que fonction de perte pour le réseau neuronal de prétraitement.

2. Procédé selon la revendication 1, dans lequel le réseau neuronal de prétraitement est un réseau de normalisation de lumière entraîné pour émettre la seconde image.

3. Procédé selon la revendication 2, dans lequel le réseau de normalisation de lumière est en outre entraîné pour émettre un score de performance pour la seconde image.

4. Procédé selon les revendications 1 à 3, dans lequel le réseau de normalisation de paramètres est entraîné à émettre un ou plusieurs parmi :
une luminosité d'image normalisée ;
un contraste d'image normalisé ; et
une correction gamma normalisée.

5. Procédé selon les revendications 1 à 4, comprenant en outre la génération de retour d'information d'utilisateur en réponse à un ou plusieurs parmi les paramètres d'éclairage normalisants dépassant un premier seuil prédéterminé.

6. Procédé selon l'une quelconque des revendications 1 à 5, comprenant en outre :
la détermination d'une différence entre la première image et la seconde image ; et
la génération de retour d'information d'utilisateur en réponse au fait que la différence dépasse un second seuil prédéterminé.

7. Procédé selon l'une quelconque des revendications 1 à 6, dans lequel la réalisation d'une détection d'objet comprend l'application d'un algorithme de point clé de corps configuré pour émettre des points clés du corps d'une personne dans la seconde image.

8. Support de programme informatique comprenant du code de programme informatique qui, lorsqu'il est exécuté sur un ordinateur, amène l'ordinateur à réaliser toutes les étapes selon l'une quelconque des revendications 1 à 7.

9. Système de prise en charge de flux de travail clinique par caméra pour la détection d'objet dans une première image prise dans des conditions d'éclairage sous-optimales, le système comprenant un processeur configuré pour :
entrer (402) la première image dans un réseau neuronal de prétraitement entraîné avec des images d'entraînement prises dans des conditions d'éclairage normalisées,
dans lequel le réseau neuronal de prétraitement est un réseau de normalisation de paramètres entraîné à émettre un ou plusieurs paramètres d'éclairage normalisants qui, lorsqu'ils sont appliqués à la première image, normalisent les conditions d'éclairage de la première image, et
dans lequel les paramètres d'éclairage normalisants sont appliqués à la première image, et
dans lequel le réseau neuronal de prétraitement est configuré pour émettre une prédiction utilisée pour générer une seconde image contenant le contenu de la première image dans des conditions d'éclairage normalisées ; et
réaliser (404) une détection d'objet sur la seconde image,
dans lequel :
lorsque la détection d'objet est réalisée sur des images prises dans des conditions d'éclairage sous-optimales, le score de confiance de détection d'objet résultant ne satisfait pas à un seuil de confiance, et
lorsque la détection d'objet est réalisée sur des images prises dans des conditions d'éclairage normalisées, le score de confiance de détection d'objet résultant satisfait au seuil de confiance ; et
dans lequel le réseau neuronal de prétraitement et le réseau neuronal de détection d'objet ont été entraînés conjointement en utilisant les mêmes images d'entraînement, dans lequel les pondérations du réseau de détection de point clé de corps ont été maintenus fixes, et l'erreur de localisation d'objet résultante a été utilisée en tant que fonction de perte pour le réseau neuronal de prétraitement.

10. Système selon la revendication 9, dans lequel le réseau neuronal de prétraitement est un réseau de normalisation de lumière entraîné pour émettre la seconde image.

11. Système selon la revendication 10, dans lequel le réseau de normalisation de lumière est en outre entraîné pour émettre un score de performance pour la seconde image.

12. Système selon la revendication 9, dans lequel le réseau neuronal de prétraitement est un réseau de normalisation de paramètres entraîné à émettre un ou plusieurs paramètres d'éclairage normalisants qui, lorsqu'ils sont appliqués à la première image, normalisent les conditions d'éclairage de la première image et le processeur est en outre configuré pour appliquer les paramètres d'éclairage normalisants à la première image afin de générer la seconde image.

13. Système selon la revendication 12, dans lequel le réseau de normalisation de paramètres est entraîné à émettre un ou plusieurs parmi :
une luminosité d'image normalisée ;
un contraste d'image normalisé ; et
une correction gamma normalisée.

14. Système selon les revendications 12 ou 13, dans lequel le processeur est en outre configuré pour générer un retour d'information d'utilisateur en réponse à un ou plusieurs parmi les paramètres d'éclairage normalisants dépassant un premier seuil prédéterminé.

15. Système selon les revendications 12 ou 13, dans lequel le processeur est en outre configuré pour déterminer une différence entre la première image et la seconde image et générer un retour d'information d'utilisateur en réponse au fait que la différence dépasse un second seuil prédéterminé.

16. Système selon les revendications 9 à 15, dans lequel le processeur est configuré pour réaliser une détection d'objet en appliquant un algorithme de point clé de corps configuré pour émettre des points clés de corps d'une personne dans la seconde image.
